# EUROPEAN PATENT APPLICATION

(11) **EP 4 455 928 A1**
(43) Date of publication of application: **30.10.2024**
(21) Application number: 24171148.0
(22) Date of filing: 18.04.2024
(51) Int. Cl.: G06F 30/20, G06F 30/25, G06F 30/27, H01F 7/20

(54) **ALGORITHMIC COIL DESIGN**

(30) Priority: 26.04.2023 US 202318307548
(71) Applicant: Vector Atomic, Inc., Pleasanton, CA 94566 (US)
(72) Inventor: LUNDEN, William David, Dublin, California, 94568 (US); SHEREDY, Daniel, Pleasanton, California, 94566 (US)
(74) Representative: Anselmi, Davide

(57) **Abstract**

Embodiments herein describe techniques for designing a magnetic coil. The coil can include a coil mount where current-carrying wires are wrapped around the mount, or a current-carrying bar where the electric current flows through the part itself. Embodiments herein also describe non-planar magnetic coils for magneto-optical trap (MOTs).

## Description

### Background Field

Embodiments of the present invention generally relate to designing electromagnetic coils.

### Description of the Related Art

Electromagnetic coils are used to create a magneto-optical trap (MOT) which is an apparatus that uses a combination of laser cooling and magnetic fields to produce cold, trapped, neutral atoms. These cold atoms can then be used for various applications such as quantum computers and quantum sensors (e.g., high precision clocks).

However, the traditional structure of a MOT is cumbersome. Conventional MOT geometry uses laser beams (e.g., six) that lie along at least two perpendicular planes. Also, the laser beams have to be arranged so they are not occluded by the coils in the MOT. These requirements result in bulky MOTs that are not suitable for many compact applications.

Miniaturizing the MOT design often requires unorthodox approaches to generating the magnetic field for a MOT, such as simply "guessing-and-checking" or intuition-guided design of the coils to result in more compact MOT design. More robust and time efficient solutions for designing electromagnetic coils are needed.

### Summary

One embodiment herein is a method that includes providing a constraint for designing a magnetic coil and generating a shape of the magnetic coil that satisfies the constraint by iteratively: calculating a magnetic field generated by the shape, determining, using an objective function, a closeness between the magnetic field generated by the shape and a desired magnetic field, and adjusting the shape based on the closeness and to satisfy the constraint.

Another embodiment herein is a method that includes providing a constraint for designing a magnetic coil for a MOT and generating a shape of the magnetic coil that satisfies the constraint by comparing a magnetic field generated by the shape to a desired magnetic field for the MOT.

Another embodiment herein is a magnetic coil that includes a current carrying component configured to generate a magnetic field for trapping atoms in a MOT, where the current carrying component is non-planar.

Another embodiment herein is a MOT that includes a first magnetic coil comprising a first current carrying component configured to generate a magnetic field for trapping atoms in the MOT where the first current carrying component is non-planar and a second magnetic coil comprising a second current carrying component configured to generate a magnetic field for trapping atoms in the MOT where the second current carrying component is non-planar.

### Brief Description of the Drawings

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.
Figure 1A illustrates a coil design system, according to one embodiment described herein.
Figures 1B-1C illustrate the constraints effect on the shape of the coil.
Figure 2 is a flowchart for designing an electromagnetic coil, according to one embodiment described herein.
Figure 3 illustrates a MOT, according to one embodiment described herein.
Figure 4A illustrates one example of an objective function indicating how close a magnetic field generated by a current design is to a desired (or ideal) magnetic field.
Figure 4B illustrates a workflow for designing a shape of an electromagnetic coil, according to one embodiment described herein.
Figure 5 illustrates results from simulating a MOT, according to one embodiment described herein.
Figure 6 is a flowchart for designing an electromagnetic coil, according to one embodiment described herein.
Figures 7A-9B illustrate a pair of electromagnetic coils, according to one embodiment described herein.

To facilitate understanding, identical reference numerals have been used, where possible, to designate identical elements that are common to the figures. It is contemplated that elements and features of one embodiment may be beneficially incorporated in other embodiments without further recitation.

### Detailed Description

Embodiments herein describe techniques for designing an electromagnetic coil. The coil can include a coil mount where current-carrying wires are wrapped around the mount, or a current-carrying bar where the electric current flows through the part itself. In one embodiment, the electromagnetic coil can be used for a MOT, but the techniques herein can be used to design coils for other applications such as an electrical transformer, electrical generator, electrical motor, and the like.

In one embodiment, the coils are designed for an application that is constrained geometrically, spatially, by power requirements, a required field strength, field geometry, alignment with laser beams, and the like. These constraints can limit the shape of the electrical coil. An engineer could design a coil to meet a constraint (e.g., a coil that fits inside a particular space) but then a simulation should be run to verify its performance. However, simulations for some applications can be compute intensive and can take a substantial amount of time. Instead, the embodiments herein determine a shape (or shapes) of electrical coils that satisfy the constraints before executing a costly simulation. This can be done using an objective function that indicates how close a magnetic field generated by a current design is to a desired (or ideal) magnetic field. For example, for a MOT, the desired or ideal magnetic field is known. The objective function can then indicate how close the magnetic field for a current coil design is to the desired magnetic field. A metaheuristic algorithm or a machine learning (ML) algorithm can then adjust the shape (e.g., deform the current coil shape or try a different coil shape) using the output of the objective function. The process can repeat until the objective function reaches a threshold - e.g., identifies an optimal coil design.

Once an optimal coil shape (or multiple optimal coil shapes) is identified, then a simulation can be performed to ensure the coil shape performs as desired. For example, the coil shape can be used in a full, Monte Carlo MOT simulation to determine how well it traps and cools atoms. Advantageously, the simulation only has to run once to verify an optimal coil shape, unlike other solutions where a full simulation is run each time a new coil shape is tested. These techniques can also be applied to other applications where a desired magnetic field is known. That is, using an objective function, a magnetic field for a current coil shape can be compared to a desired magnetic field. The output of the objective function can then be used to iteratively adjust the coil shape until identifying an optimal shape. Thus, only the magnetic field of the current coil shape is determined during each iteration. Once the optimal coil shape is identified, then a full simulation of the application (e.g., a MOT, transformer, generator, motor, etc.) can be run using the optimal coil shape to verify its performance, thereby reducing the amount of time and compute resources needed to identify an optimal coil design.

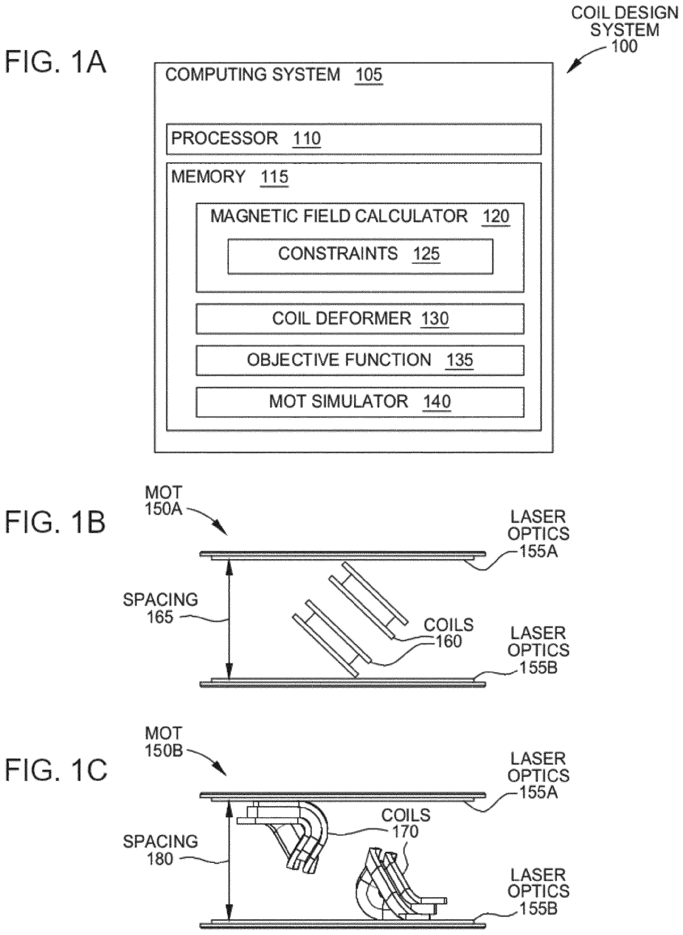

Figure 1A illustrates a coil design system 100, according to one embodiment described herein. The system 100 includes a computing system 105 that includes a processor 110 and memory 115. The computing system 105 can represent a single computing device (e.g., a server) or multiple computing devices (e.g., a data center). The processor 110 can represent any number of processing devices with any number of processor cores. The memory 115 can include volatile memory elements, nonvolatile memory elements, and combinations thereof.

The memory 115 stores a magnetic field calculator 120, a coil deformer 130, an objective function 135, and a MOT simulator 140. The magnetic field calculator 120 (e.g., a software application) determines (or calculates) a shape of a magnetic field generated by a magnetic coil that is currently being tested. Further, the shape of the coil being tested can be limited by one or more constraints 125, such as a geometric constraint, a spatial constraint, a power constraint (or requirement), a field strength constraint (or requirement), a field geometry constraint (or requirement), alignment constraint, and the like.

The coil deformer 130 (e.g., a software application) can iteratively adjust the shape of the coil (e.g., by deforming a current shape or testing a new shape) based on an output of the objective function 135. In one embodiment, the objective function 135 indicates how closely the magnetic field for the current magnetic coil being tested is to an ideal or desired magnetic field. Using a MOT as an example, the vector-valued functional form of the desired magnetic field used in a MOT is known. The objective function 135 compares this known magnetic field to the magnetic field generated by the coil being tested. For example, a higher score (or value) can indicate the magnetic fields are close, while a lower score indicates the magnetic fields are different. In one embodiment, the coil deformer 130 can then adjust the coil based on the score or value generated by the objective function 135. For example, if the score is high, the coil deformer 130 may make a small adjustment to the current coil shape and determine whether the resulting magnetic field is even closer to the desired magnetic field by calculating a new score using the updated magnetic field and the objective function 135. If the score is low, the coil deformer 130 may try a completely new shape for the coil, or make more dramatic changes to the current shape of the coil.

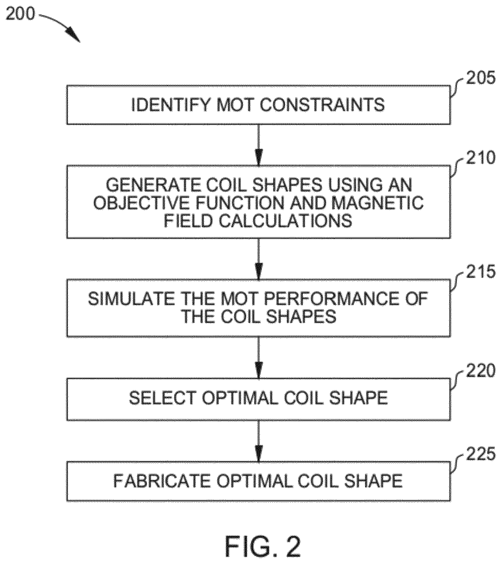

The MOT simulator 140 (e.g., a software application) can simulate the performance of a particular coil. For example, after the coil deformer 130 identifies an optimal coil shape after iterating through the process described above, the MOT simulator 140 can test that coil shape to determine whether it traps atoms. Advantageously, the MOT simulator 140 does not have to be run each time a new coil is being tested. Instead, the magnetic field calculator 120, the coil deformer 130 and the objective function 135 can execute to identify an optimal coil (or a family of optimal coils) which is then tested using a MOT simulator 140. Executing the magnetic field calculator 120, the coil deformer 130 and the objective function 135 may use much fewer compute resources than the MOT simulator 140, thereby reducing the compute power and time required to identify a magnetic coil for a MOT that satisfies the constraints 125. Various techniques for determining a constrained coil are described in more detail in Figure 2 below.

Figures 1B-1C also illustrate the effect the constraints 125 can have on the shape of the coil. In this example, the MOTs 150A and 150B are constrained by a spacing 165 and 180 between first laser optics 155A and a second laser optics 155B. For example, the laser optics 155 can be metasurfaces that direct lasers towards a center of the MOT 150 which work in combination with the magnetic fields emitted by the coils 160 and 170 to trap atoms.

The spacing 165 between the laser optics 155 in the MOT 150A is larger than the spacing 180 between the laser optics 155 in the MOT 150B. Put differently, the MOT 150B is more constrained than the MOT 150A. This may be for any variety of reasons, such as achieving more compact packaging, better performance, lowering power consumption, and the like.

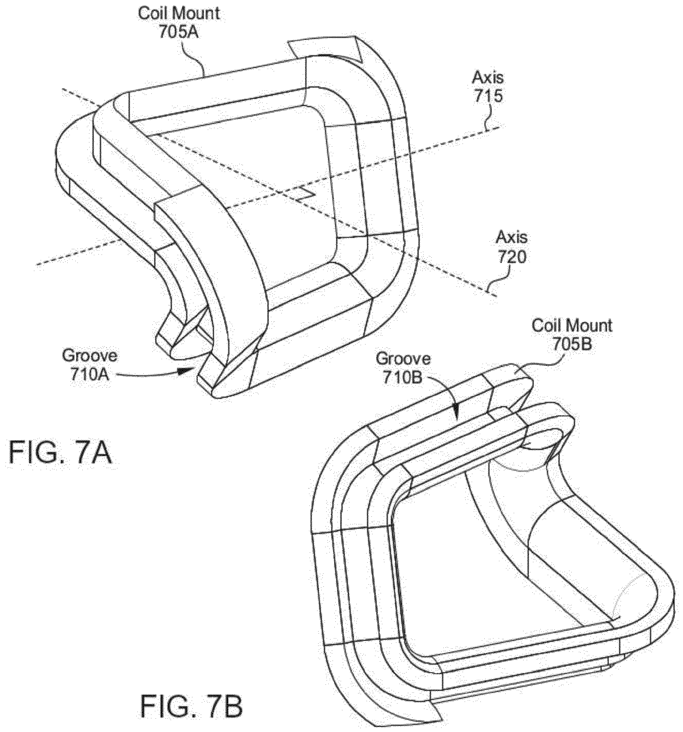

The MOT 150A illustrates the optimal coils 160 determined by the coil deformer 130 using the techniques discussed above (and in more detail in Figure 2) and the spacing 165, while the MOT 150B illustrates the optimal coils 170 determined by the coil deformer 130 using the techniques discussed above (and in more detail in Figure 2) and the spacing 180. As shown, the difference between the coils 160 and 170 due to changing the spacing constraint is dramatic. The coils 160 are similar to the typical coils (e.g., planar rings) used in conventional, unconstrained MOT systems while the coils 170 have an unconventional "twisted" shape that accommodates the constraint. These coils 170 are shown in greater detail in Figures 7A-9B.

While the shape of the coils 160 and 170 are different, the magnetic fields generated by these coils 160 and 170 are the same or very similar within a region of interest. That is, as discussed above, the coil deformer 130 can use the objective function 135 to determine coil shapes that generate a magnetic field that matches, or is very close, to the ideal or desired magnetic field given the particular constraints. As such, the magnetic fields for the coils 160 and 170 may be the same or very close to each other's magnetic field, as well as the ideal or desired magnetic field. However, the coils 170 can fit within the smaller spacing 180 while the coils 160 cannot.

Figure 2 is a flowchart of a method 200 for designing a magnetic coil, according to one embodiment described herein. At block 205, the coil deformer (e.g., the coil deformer 130 in Figure 1) defines the MOT constraints. While the method 200 is described in the context of generating coil shapes for a MOT, the method 200 can be used to design magnetic coils for other applications such as generators, electrical motors, transformers, and the like.

The method 200 can use a single constraint (e.g., a spacing constraint between the laser optics 155 in Figure 1A) or a combination of constraints. For example, the method 200 can be used to identify a shape of coil that fits a spacing constraint and satisfies a minimum power dissipation threshold. Or the method 200 can be used to identify a coil that has a maximum field strength and avoids occluding a particular laser arrangement. In this manner, the coil deformer can consider any number of constraints such as a geometric constraint, a spatial constraint, a power constraint, a magnetic field strength constraint, a magnetic field geometry constraint, an alignment constraint, and the like.

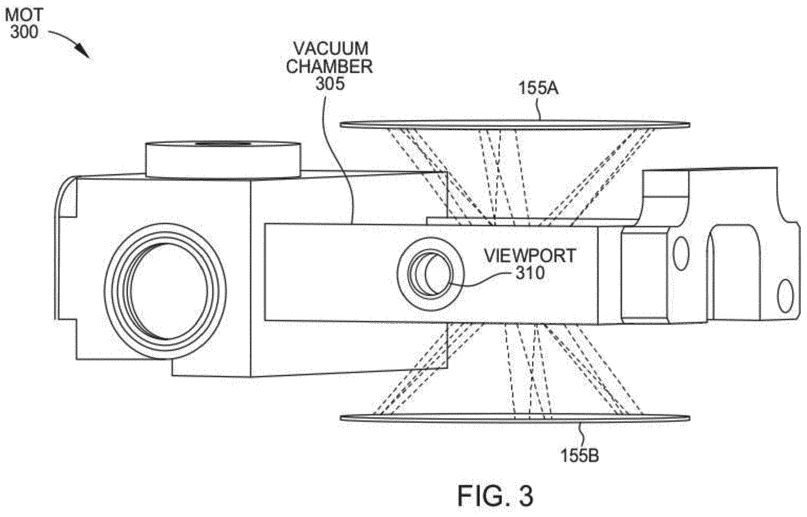

Figure 3 illustrates a constrained MOT 300, according to one embodiment. The MOT 300 includes a vacuum chamber 305 that contains the atoms that are trapped. The MOT 300 also includes the laser optics 155A and 155B for emitting lasers into the vacuum chamber 305 to aid in trapping the atoms near a viewport 310.

In typical MOTs, the magnetic coils are disposed outside of the vacuum chamber 305. However, it may be advantageous to put the coils within the vacuum chamber 305. For example, the power required to generate a sufficiently strong magnetic field for trapping the atoms falls as the coils are moved closer to the atoms, and so often can be reduced significantly if the coils are within the vacuum chamber 305. However, the space in the vacuum chamber 305 is limited, thereby enforcing a spacing constraint on the coils. Thus, Figure 3 illustrates a constrained MOT 300 where the method 200 can be used to identify a coil shape that can fit within the vacuum chamber 305 where a typical coil shape (e.g., the ring shape of the coils 160 in Figure 1B) would be unsuitable.

Returning to the method 200, at block 210, the coil deformer generates coil shapes using an objective function (e.g., the objective function 135 in Figure 1A) and magnetic field calculations. In this example, the coil deformer generates multiple optimal coil shapes. For instance, the coil deformer may use a metaheuristic algorithm or a ML algorithm/model that can identify multiple shapes.

In one embodiment, the coil deformer performs an iterative process at block 210. Using an initial coil shape, a magnetic field calculator (e.g., the magnetic field calculator 120 in Figure 1A) determines the magnetic field generated by the coil shape. The objective function then compares this magnetic field to the desired or ideal magnetic field for the MOT, which is known. For example, the objective function can compare the field strength and geometry of the magnetic field from the coil being tested to those of the desired magnetic field for the MOT. The magnetic field calculator can then use the output or score of the objective function as an input to the metaheuristic algorithm or a ML algorithm/model to adjust the shape - e.g., deform the shape or switch to a different shape.

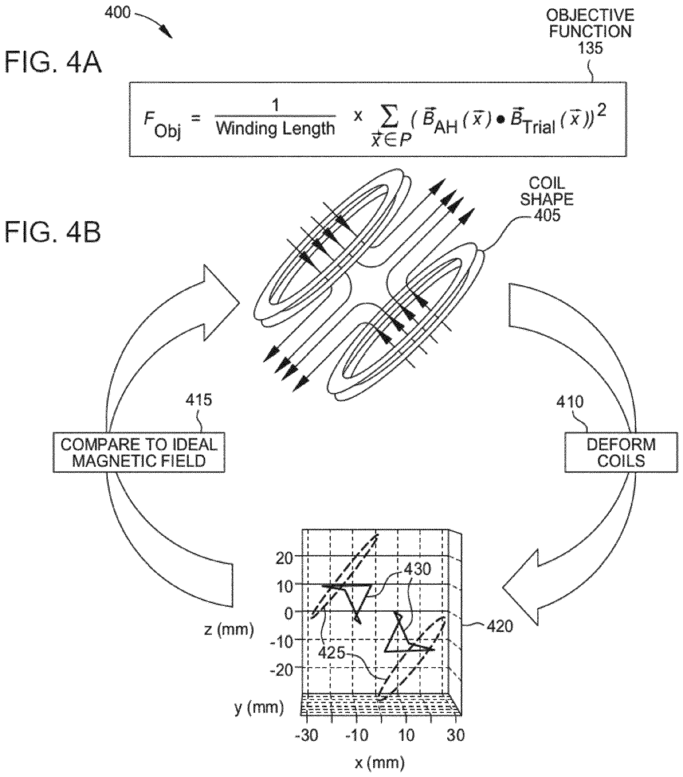

Figure 4B illustrates a workflow 400 for performing the iterative process at block 210 of the method 200, according to one embodiment described herein. Figure 4B illustrates a coil shape 405 which is currently being tested. Each time the coil deformer deforms the coil shape 405 at block 410, the magnetic field calculator can determine the difference between the magnetic field generated by the deformed coil and the ideal magnetic field of the MOT at block 415. This can be done using the objective function 135.

In this example, the objective function 135 determines the dot product of the magnetic fields (B) for the ideal field (AH) and the coil shape currently being tested (Trial) at a set of points (P). P samples the region where the atoms are being trapped by the MOT. The individual dot products are then squared and summed, and the resulting summation is then multiplied with the inverse of the winding length of the coil. When the winding length is lower, then the coils are more power efficient.

The output F_{Obj} (or score) of the objective function 135 reflects both the closeness between the field generated by the current coil shape 405 being tested and the ideal or desired field for the MOT, and the power efficiency of the current coil shape 405. In this example, the higher the output F_{Obj}, the better the fields match and/or the lower the power required to generate the field.

The objective function 135 in Figure 4A is just one example of a suitable objective function 135. This function 135 attempts to maximize the output F_{Obj} and improve power efficiency by incorporating a winding length of the magnetic coil, but other objective functions 135 can be used for different constraints. As an example, another objective function may not consider winding length (e.g., power). As another example, an objective function may consider maximizing optical access by rewarding or penalizing certain shapes. Further, the area of interest can be changed by changing the set of points P over which the dot product is summed.

Figure 4B also illustrates a graph 420 showing a trial coil shape 430 resulting from performing the iterative process illustrated in Figure 4B. Also shown is a reference coil shape 425 which produces an ideal magnetic field for a MOT, but which does not obey the spatial constraints. In one embodiment, the iterative process in Figure 4B may have stopped once the output F_{Obj} of the objective function 135 reaches a threshold, after a predefined time period expires, or after a threshold number of iterations.

The embodiments herein are not limited to a particular type of metaheuristic algorithm or ML algorithm for deforming the coil shape 405 at block 410. In one embodiment, a simulated annealing algorithm is used to deform the coil shape 405 each time the workflow 400 repeats. However, other suitable metaheuristic algorithms could include a scatter search, particle swarm optimization, evolution strategy, an iterated/stochastic/guide local search, and the like. If a ML algorithm is used, the ML algorithm could use reinforcement learning (RL) or another deep learning method. Returning to the method 200, at block 215, the MOT simulator (e.g., the simulator 140 in Figure 1A) simulates the MOT performance of the coil shapes determined at block 210. In this case, the results of the MOT simulator can be used to select which one of the coil shapes generated at block 210 should be used in the physical MOT. That is, if the particular metaheuristic algorithm or ML model used at block 210 generates multiple suitable coil shapes, block 215 can be used to identify which one of those shapes results in the best MOT performance. However, even if the iterative process performed at block 210 results in a single coil shape, block 215 can be used to ensure this coil shape results in satisfactory MOT performance. If not, block 210 can be repeated using a different initial shape, or using a different type of metaheuristic or ML algorithm. However, in other example, if block 210 outputs only one coil shape, then block 215 may be skipped or omitted.

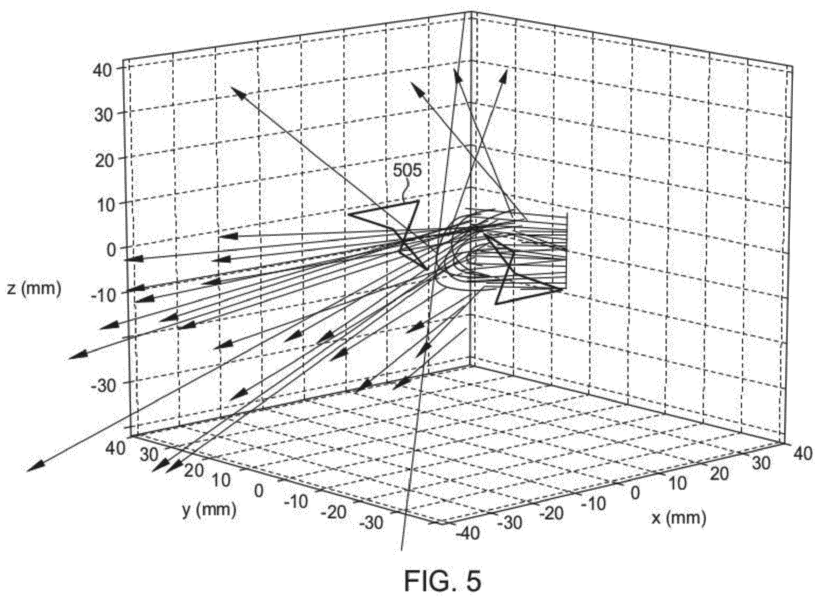

Figure 5 illustrates simulating a MOT, according to one embodiment described herein. That is, Figure 5 illustrates one example of testing a coil shape 505 to determine whether its magnetic field traps atoms as part of block 215 in the method 200. In one embodiment, the magnetic field simulator evaluates the coil shape (or shapes) using a numerical simulation, such as a Monte Carol kinematics simulation which evaluates the cooling and trapping forces on a set of trial atoms to determine the effectiveness of the coil shape 505. The magnetic field simulator may also, for example, scan through a range of currents for the coil shape 505 to determine how well the resulting magnetic field traps atoms.

Returning to Figure 2, at block 220, the magnetic field simulator selects an optimal coil shape using the results from the simulations performed at block 215.

At block 225, the coil shape is fabricated to form a physical magnetic coil. In one embodiment, the coil shape can be for coil mounts where current-carrying wires are wrapped around the mounts or for current-carrying bars where the electric current flows through the part itself. If the coil shape is for coil mounts, in a subsequent step, current carrying wire can be wound around the mounts.

In one embodiment, the magnetic coil is formed using a mold or cast. For example, as shown in Figure 1C, the coils 170 have an unusual shape which may not be suitable with conventional coil manufacturing techniques. Thus, a special mold or cast can be used.

In another embodiment, the magnetic coil is formed using additive manufacturing to deposit material in a layer-by-layer manner. Each new layer can bond to the preceding layer to generate a 3D object (e.g., a magnetic coil or coil mount).

As discussed in Figure 3, the magnetic coil may be used in a vacuum chamber - e.g., an ultra-high vacuum (UHV) environment. It can be challenging to identify a material that is suitable for additive manufacturing and also suitable for a UHV environment.

One such suitable material is a combination of Aluminum, Silicon, and Magnesium. In one embodiment, AlSi₁₀Mg can be used to form a magnetic coil for use in a UHV. In another embodiment, copper can be used in additive manufacturing to form a magnetic coil for use in a UHV.

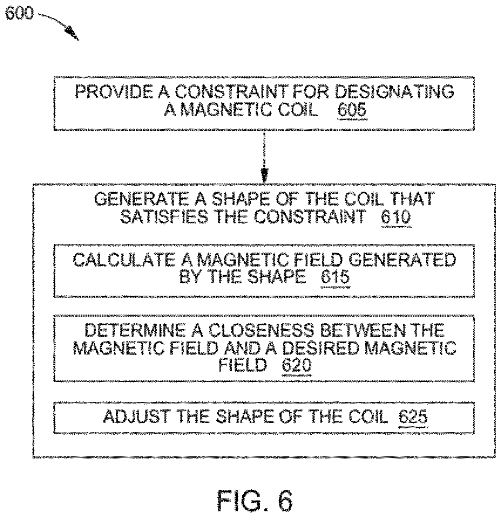

Figure 6 is a flowchart of a method 600 for designing a magnetic coil, according to one embodiment described herein. At block 605, a user provides at least one constraint for designing a magnetic coil. The coil may be used in any application that is constrained due to space (volume) of a container, power, geometry, alignment with other components (e.g., lasers) and the like. The coil may be constrained using the constraints discussed at block 205 of the method 200.

Further, the method 600 is generally applicable to any application where coils are used to generate magnetic fields such as transformers, electrical motors, generators, MOTs, etc.

At block 610, the coil deformer generates a shape of a coil that satisfies the constraint provided at block 605. Further, block 610 includes several sub-blocks 615-625 that can be used to generate the shape of the coil. In one embodiment, the method 600 iterates through the sub-blocks 615-625 until identifying an optimal coil shape.

At block 615, the magnetic field calculator calculates a magnetic field generated by the shape.

At block 620, the coil deformer determines a closeness between the magnetic field calculated at block 615 and a desired magnetic field for the particular application - e.g., a desired magnetic field for a transformer, electrical motor, generator, MOT, etc. The objective function can include any of the examples discussed above.

At block 625, the coil deformer adjusts the shape of the coil. The manner in which the coil deformer adjusts the shape can vary according to the type of metaheuristic algorithm or ML model used. For example, a simulated annealing algorithm may perform random changes in the shape using the output of the objective function as guidance. Some metaheuristic algorithms may result in a family of coil shapes when the sub-blocks 615-625 are performed iteratively, while other algorithms may deform a single shape until reaching a maximum value of the objective function.

Although not shown in the method 600, once block 610 is complete, the shape of the coil may be used in a full-simulator of the particular application - e.g., a transformer simulator, motor simulator, MOT simulator, etc. Advantageously, rather than running a full simulation during each iteration, the method 600 can perform the blocks 610-625 to identify one or more candidate coil shapes before executing the simulator. However, in other embodiments, it may be advantageous to execute the simulator each time the blocks 610-625 iterate. Put differently, a simulation block could also be performed during each iteration of the blocks 610-625 to fully test each coil shape.

Figures 7A-9B illustrate various views of coil mounts 705 that can be designed and fabricated using the techniques above. For example, the coil mounts 705 can be used to realize the coils 170 illustrated in Figure 1C.

Figures 7A-7B illustrate a first isometric view of the coil mounts 705A and 705B which can be fixedly arranged as shown to generate a magnetic field for trapping atoms in a MOT. In this example, the coil mounts 705A and 705B include respective grooves 710A and 710B in which wire can be wound. This wire is a current-carrying component that can generate the magnetic field. Because the wire is disposed in the grooves, the wire has a same shape as the coil mounts 705A and 705B.

However, in other embodiments, rather than designing coil mounts, the techniques above can be used to directly fabricate coil bars. In that example the coil mounts 705 could be coil bars (i.e., current carrying components), which means the grooves 710A and 710B can be omitted since the additional step of winding the wire is not needed. In this example, the coils would be a solid, conductive material rather than wound wires. The solid, conductive material could be formed using a mold or additive manufacturing as discussed above.

As shown, the coil mounts 705 are twisted, which means when wires are disposed in the mounts 705, they form a coil with a twisted shape. Stated differently, each of the coil mounts 705 is non-planar, unlike traditional magnetic coils for MOTs that are planar.

In addition, Figures 7A-7B illustrate a first axis 715 that is orthogonal to a second axis 720. The first axis 715 and the second axis 720 both extend through the geometric center of the coil mount 705A. The coil mount 705A is non-symmetric relative to both the first axis 715 and the second axis 720.

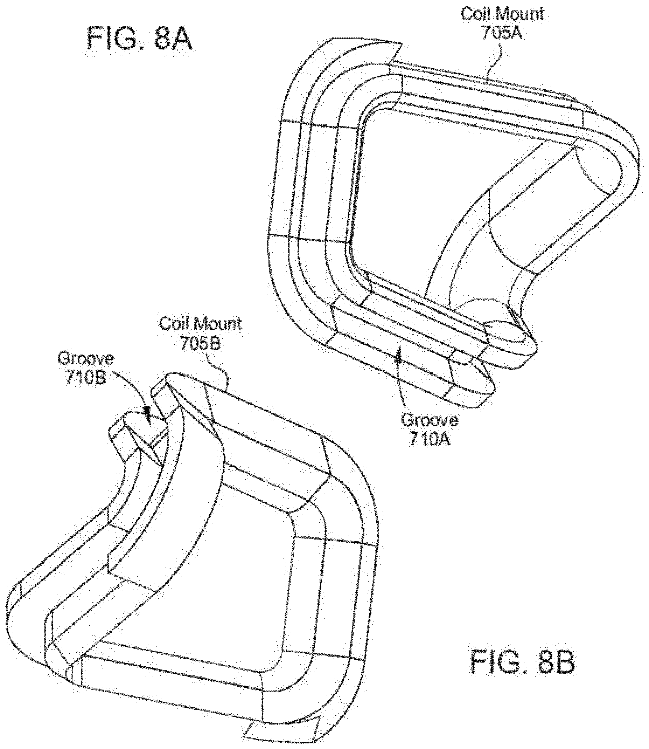

While in other implementations the coil mounts 705 may have different shapes, in Figures 7A-9B, the coil mounts 705 have point symmetry. However, their orientations are different when arranged in a MOT. That is, the coil mount 705A has a different orientation relative to the orientation of the coil mount 705B when mounted in a MOT. Figs. 8A-8B illustrate a second isometric view of the coil mounts 705.

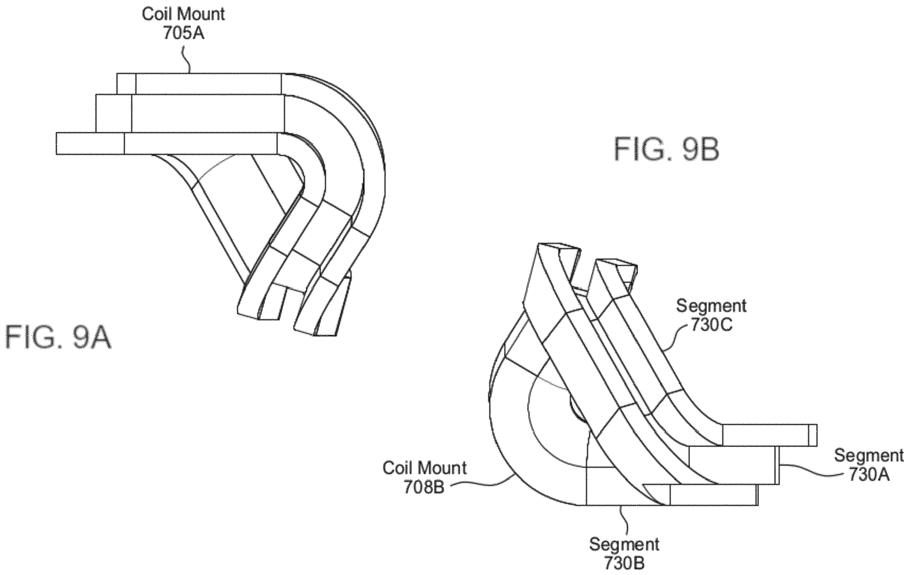

Figs. 9A-9B illustrates a side view of the coil mounts 705. Figs. 9A-9B also illustrate that the coil mounts 705 can have co-planar and non-planar segments. In this example, three segments 730 are labeled. The segments 730A is co-planar with the segment 730B. However, the segment 730C is non-planar with the segment 730A and the segment 730B.

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim. As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. As will be appreciated by one skilled in the art, the embodiments disclosed herein may be embodied as a system, method, or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon. Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

The following Clauses provide some example configurations of the method, the magnetic coil and the MOT as disclosed herein.

Clause 1: A method, comprising providing a constraint for designing a magnetic coil; and generating a shape of the magnetic coil that satisfies the constraint by iteratively: calculating a magnetic field generated by the shape; determining, using an objective function, a closeness between the magnetic field generated by the shape and a desired magnetic field, and adjusting the shape based on the closeness and to satisfy the constraint.

Clause 2: The method as set forth in clause 1, wherein adjusting the shape comprises inputting the closeness into a metaheuristic algorithm to deform the shape.

Clause 3: The method as set forth in clause 1, wherein adjusting the shape comprises inputting the closeness into a machine learning algorithm to adjust the shape.

Clause 4: The method as set forth in clause 1, wherein the constraint corresponds to a volume or a spacing of a container that will contain the magnetic coil.

Clause 5: The method as set forth in clause 1, wherein the constraint corresponds to a required field strength of the magnetic coil.

Clause 6: The method as set forth in clause 1, wherein the constraint corresponds to a field geometry and alignment with respect to laser beams.

Clause 7: The method as set forth in clause 1, further comprising, after generating the shape of the magnetic coil simulating a performance of a magneto-optical trap (MOT) that comprises two coils based on the shape of the magnetic coil.

Clause 8: A method, comprising: providing a constraint for designing a magnetic coil for a MOT; and generating a shape of the magnetic coil that satisfies the constraint by comparing a magnetic field generated by the shape to a desired magnetic field for the MOT.

Clause 9: The method as set forth in clause 8, wherein comparing the magnetic field generated by the shape to the desired magnetic field for the MOT is performed using an objective function that indicates a closeness between the magnetic field generated by the shape and the desired magnetic field for the MOT.

Clause 10: The method as set forth in clause 9, wherein the objective function compares the magnetic fields of the shape and the MOT in a region where atoms are trapped by the MOT.

Clause 11: The method as set forth in clause 10, wherein the objective function considers power efficiency by incorporating a winding length of the magnetic coil.

Clause 12: The method as set forth in clause 8, wherein generating the shape of the magnetic coil comprises adjusting the shape during each iteration using a metaheuristic algorithm.

Clause 13: The method as set forth in clause 8, wherein generating the shape of the magnetic coil comprises adjusting the shape during each iteration using a machine learning algorithm.

Clause 14: The method as set forth in clause 8, wherein the constraint corresponds to a volume or a spacing of a vacuum chamber of the MOT.

Clause 15: The method as set forth in clause 8, wherein the constraint corresponds to a field geometry and alignment with respect to laser beams in the MOT.

Clause 16: The method as set forth in clause 8 further comprising, after generating the shape of the magnetic coil, simulating a performance of the MOT that comprises two coils based on the shape of the magnetic coil.

Clause 17: A magnetic coil, comprising a current carrying component configured to generate a magnetic field for trapping atoms in a MOT, wherein the current carrying component is non-planar.

Clause 18: The magnetic coil as set forth in clause 17, wherein the current carrying component forms a coil with a twisted shape.

Clause 19: The magnetic coil as set forth in clause 17, further comprising a coil mount, wherein the current carrying component comprises wires wound in a groove in the coil mount.

Clause 20: The magnetic coil as set forth in clause 19, wherein the coil mount comprises a first segment, a second segment, and a third segment, wherein the first and second segments are co-planar and the third segment is non-planar with the first and second segments.

Clause 21: The magnetic coil as set forth in clause 17, wherein the current carrying component is a solid, conductive material.

Clause 22: The magnetic coil as set forth in clause 17, wherein the current carrying component is non-symmetric with two orthogonal axes that extend through a geometric center of the current carrying component.

Clause 23: The magnetic coil as set forth in clause 17, wherein a portion of the magnetic coil is formed from a material that comprises Aluminum, Silicon, and Magnesium formed using additive manufacturing.

Clause 24: The magnetic coil as set forth in clause 23, wherein the material is part of a coil mount, and wherein the material comprises AlSi10Mg.

Clause 25: The magnetic coil as set forth in clause 17, further comprising a coil mount, wherein the current carrying component comprises wires wound in a groove in the coil mount, wherein the coil mount comprises copper formed using additive manufacturing.

Clause 26: A MOT, comprising a first magnetic coil comprising a first current carrying component configured to generate a magnetic field for trapping atoms in the MOT, wherein the first current carrying component is non-planar; and a second magnetic coil comprising a second current carrying component configured to generate a magnetic field for trapping atoms in the MOT, wherein the second current carrying component is non-planar.

Clause 27: The MOT as set forth in clause 26, wherein the first and second current carrying components have point symmetry.

## Claims

1. A method, comprising:
providing a constraint (125) for designing a magnetic coil; and
generating a shape of the magnetic coil that satisfies the constraint (125) by iteratively:
calculating a magnetic field generated by the shape,
determining, using an objective function (135), a closeness between the magnetic field generated by the shape and a desired magnetic field, and
adjusting the shape based on the closeness and to satisfy the constraint (125).

2. The method according to claim 1, wherein adjusting the shape comprises:
inputting the closeness into a metaheuristic algorithm to deform the shape.

3. The method according to claim 1, wherein adjusting the shape comprises:
inputting the closeness into a machine learning algorithm to adjust the shape.

4. The method according to any one of the preceding claims, wherein the constraint (125) corresponds to at least one of the following:
- a volume or a spacing (180) of a container that will contain the magnetic coil; and/or
- a required field strength of the magnetic coil; and/or
- a field geometry and alignment with respect to laser beams.

5. The method according to any one of the preceding claims, further comprising, after generating the shape of the magnetic coil:
simulating a performance of a magneto-optical trap ("MOT" 300) that comprises two coils (170) based on the shape of the magnetic coil.

6. The method according to any one of the preceding claims, comprising:
providing a constraint (125) for designing a magnetic coil for a MOT (300); and
generating a shape of the magnetic coil that satisfies the constraint (125) by comparing a magnetic field generated by the shape to a desired magnetic field for the MOT (300).

7. The method according to claim 6, wherein comparing the magnetic field generated by the shape to the desired magnetic field for the MOT (300) is performed using an objective function (135) that indicates a closeness between the magnetic field generated by the shape and the desired magnetic field for the MOT (300),
wherein the objective function (135) compares the magnetic fields of the shape and the MOT (300) in a region where atoms are trapped by the MOT (300), and
wherein the objective function (135) considers power efficiency by incorporating a winding length of the magnetic coil.

8. The method according to claim 6 or 7, wherein the constraint (125) corresponds to at least one of the following:
- a volume or a spacing of a vacuum chamber (305) of the MOT (300); and/or
- a field geometry and alignment with respect to laser beams in the MOT (300).

9. A magnetic coil made according to the method of any one of the claims from 1 to 8, comprising:
a current carrying component configured to generate a magnetic field for trapping atoms in a MOT (300),
wherein the current carrying component is non-planar.

10. The magnetic coil according to claim 9, wherein the current carrying component forms a coil (170) with a twisted shape.

11. The magnetic coil according to claim 9 or 10, wherein the coil mount comprises a first segment (730A), a second segment (730B), and a third segment (730C), wherein the first and second segments (730A, 730B) are co-planar and the third segment (730C) is non-planar with the first and second segments (730A, 730B).

12. The magnetic coil according to any one of the preceding claims from 9 to 11, wherein the current carrying component is non-symmetric with two orthogonal axes (715, 720) that extend through a geometric center of the current carrying component.

13. The magnetic coil according to any one of the preceding claims from 9 to 12, wherein a portion of the magnetic coil is formed from a material that comprises Aluminum, Silicon, and Magnesium formed using additive manufacturing.

14. The magnetic coil according to any one of the preceding claims from 9 to 13, further comprising:
a coil mount (705A, 705B), wherein the current carrying component comprises wires wound in a groove (710A, 710B) in the coil mount (705A, 705B), wherein the coil mount (705A, 705B) comprises copper formed using additive manufacturing.

15. A MOT (300), comprising
a first magnetic coil, according to anyone of claims from 9 to 14, comprising a first current carrying component configured to generate a magnetic field for trapping atoms in the MOT (300), wherein the first current carrying component is non-planar; and
a second magnetic coil, according to anyone of claims from 9 to 14, comprising a second current carrying component configured to generate a magnetic field for trapping atoms in the MOT (300), wherein the second current carrying component is non-planar.
